# EUROPÄISCHE PATENTSCHRIFT

(11) **EP 1 253 829 B1**
(45) Veröffentlichungstag und Bekanntmachung des Hinweises auf die Patenterteilung: **29.10.2003**
(21) Anmeldenummer: 01913788.4
(22) Anmeldetag: 07.02.2001
(51) Int. Cl.: A23G 9/02, A23C 13/14, A23L 1/19

(54) **SÜSSWARE MIT HOHEM MILCHEIWEISSGEHALT, HOHER MILCHTROCKENMASSE UND MIT GERINGEM DENATURIERUNGSGRAD DER MOLKENPROTEINE UND VERFAHREN ZU IHRER HERSTELLUNG**
CONFECTIONERY WITH HIGH MILK PROTEIN CONTENT, HIGH MILK DRY MASS, LOW DENATURATION LEVEL OF THE MILK PROTEIN AND METHOD FOR PRODUCTION THEREOF
PREPARATION ALIMENTAIRE SUCREE A TENEUR ELEVEE EN PROTEINES DE LAIT ET EN MATIERE SECHE DE LAIT ET A FAIBLE DEGRE DE DENATURATION DES PROTEINES SERIQUES, ET PROCEDE DE FABRICATION DE LADITE PREPARATION

(30) Priorität: 07.02.2000 DE 10005374
(43) Veröffentlichungstag der Anmeldung: 06.11.2002
(73) Patentinhaber: Ferrero oHG mbH, 35260 Stadtallendorf (DE)
(72) Erfinder: LO FORTE, Ubaldo, 35315 Ober-Ofleiden (DE); VENNERI, Salvatore, 35274 Kirchhain (DE)
(74) Vertreter: HOFFMANN - EITLE
(86) Internationale Anmeldenummer: EP0101319
(87) Internationale Veröffentlichungsnummer: WO01056400

(56) Entgegenhaltungen:
- EP-A- 0 779 035
- DE-A- 3 727 680
- DE-C- 4 344 534
- US-A- 3 749 583

## Beschreibung

Die Erfindung betrifft eine auf Milchbestandteilen basierende Süßware, ein Verfahren zu ihrer Herstellung und hieraus erhältliche Verbraucherprodukte.

In der DE- 30 15 825 C2 ist eine lang haltbare Süßware in Form einer weichen, mit einem Inertgas geschäumten Masse auf Basis einer Öl-in-Wasser-Emulsion beschrieben, die Milchbestandteile, Speisefett, Zucker, Monoglyceride und Wasser enthält, sowie einen pH-Bereich von 6,2 bis 7,5 aufweist. Die Konsistenz der Süßware reicht von einer streichfähigen Creme bis zu einer verhältnismäßig dichten, schnittfesten Paste. Sie ist formfest und lange haltbar und weist keine vom Konsumenten wahrnehmbaren Laktosekristalle auf. Weiterhin ist wenigstens ein Teil des Speisefettes in kristallisierter Form enthalten. Bei der Herstellung dieser Süßware wird von gezuckerter, teilentrahmter Kondensmilch ausgegangen, die den Hauptbestandteil einer wässrigen Phase bildet, die mit einer Speisefette und Monoglyceride enthaltenden Ölphase zu einer Öl-in-Wasser-Emulsion verarbeitet wird. Im Anschluss daran wird die Emulsion pasteurisiert, mit Lactosekeimkristallen versetzt und durch Einblasen von Inertgas aufgeschäumt. Unter Rühren und Abkühlen der Emulsion wird wenigstens ein Teil des Speisefettes kristallisiert.

Bei der Herstellung von Kondensmilch werden üblicherweise Temperaturen von 100 bis zu 120°C für 1 bis 3 Minuten beim Pasteurisieren der Milch und von 65 bis 70°C beim Eindampfen der Milch eingesetzt, die zu einer teilweisen Denaturierung der Molkenproteine führen.

Weiterhin beschreibt die DE-43 44 534 C1 eine aufgeschäumte Milchcreme, die hergestellt wird, indem man eine auf einen bestimmten Fettgehalt und Eiweißgehalt eingestellte Milch und/oder Milchprodukte zur Denaturierung der Serumproteine und aus bakteriologischen Gründen erhitzt, anschließend Honig, Trockenkomponenten und geschmacksgebende Substanzen in die Milch einrührt, eine Mischung aus Fett bzw. Fetten mit Emulgatoren und/oder Stabilisatoren herstellt, diese Mischung mit der zuvor hergestellten Milchmischung vermengt und aus bakteriologischen Gründen erhitzt, anschließend die Mischung auf Aufschlagtemperatur abkühlt, die Mischung aufschlägt, die aufgeschlagene Mischung abkühlt und kristallisieren lässt.

Das oben beschriebene Verfahren führt jedoch zu einer Süßware, die in einem beträchtlichen Anteil denaturierte Molkenproteine enthält.

Zum Stand der Technik gehören weiterhin Süßwaren, die aus frischer pasteurisierter Vollmilch (Frischmilch) und Magermilchpulver als Milchgrundlage hergestellt werden. Hierbei weist das Magermilchpulver aufgrund der hohen Temperaturen bei der Herstellung einen größeren Gehalt an denaturierten Molkenproteinen und auch einen höheren Verlust an Vitaminen auf.

Aus ernährungsphysiologischen Gründen ist jedoch das Vorliegen von natürlichem Milcheiweiß (geringer Denaturierungsgrad der Molkenproteine) bei einem hohen Milcheiweißgehalt und bei einer hohen Milchtrockenmasse wünschenswert.

Die der Erfindung zugrunde liegende Aufgabenstellung besteht darin, eine Süßware bereitzustellen, die ernährungsphysiologisch gegenüber den bekannten Süßwaren verbessert ist.

Die obige Aufgabe wird durch eine lang haltbare Süßware in Form einer weichen, cremigen, formstabilen und aufgeschäumten Masse gelöst, die Milchbestandteile, Speisefette, Zucker und/oder Zuckerersatzstoffe und Wasser umfasst, wobei wenigstens ein Teil des Speisefettes bei Raumtemperatur in kristallisierter Form enthalten ist, und wobei die Süßware keine vom Konsumenten wahrnehmbaren Laktosekristalle enthält, und gekennzeichnet ist durch einen Milcheiweißgehalt von 6 bis 20 Gew.%, bezogen auf das Gesamtgewicht der Süßware, einer fettfreien Milchtrockenmasse von 16 bis 55 Gew.%, bezogen auf das Gesamtgewicht der Süßware, und einem Denaturierungsgrad der Molkenproteine von ≤ 20%.

Die erfindungsgemäße Süßware weist eine lange Haltbarkeit auf. Dies bedeutet, dass sie bei Kühllagerung (≤ 12°C), z.B. im Kühlschrank oder Kühlregal, mindestens 6 Monate haltbar ist, d.h. mikrobiologisch nicht zu beanstanden ist. Die lange Haltbarkeit der erfindungsgemäßen Süßware resultiert im wesentlichen aus ihrem Milchtrockenmasse- und ihrem Zucker- bzw. Zuckerersatzstoffgehalt sowie einem Pasteurisierungsvorgang bei ihrer Herstellung. Milcheiweiß und Zucker bzw. Zuckerersatzstoff führen zu einer Wasserbindung und einer Herabsetzung der Wasseraktivität. Vorzugsweise liegt die Wasseraktivität a_{w} bei ≤ 0,9.

Weiterhin ist die erfindungsgemäße Süßware weich und damit auch gut streichfähig. Der Begriff "weich" charakterisiert die Festigkeit der Süßware und lässt sich durch die effektive Viskosität beschreiben, die bei einem Schergefälle von 0,5 s⁻¹ und bei einer Temperatur von 20°C vorzugsweise Werte von 100 bis 5000 Pas, insbesondere bevorzugt von 500 bis 2000 Pas, aufweist.

Die cremige Konsistenz der erfindungsgemäßen Süßware wird insbesondere über die Milchtrockenmasse, den Schmelzbereich der Fette, den Zucker- und Zuckerersatzstoffanteil und den Wassergehalt eingestellt. Eine Süßware gilt als "cremig", wenn ihre effektive Viskosität mit steigendem Schergefälle abnimmt. Dementsprechend wird die Eigenschaft der Cremigkeit der erfindungsgemäßen Süßware messtechnisch über den Viskositätsverlauf in Abhängigkeit vom Schergefälle nachgewiesen.

Die erfindungsgemäße Süßware ist weiterhin formstabil (formfest). Dies bedeutet rheologisch gesehen, dass sie eine Fließgrenze aufweist und somit unter dem Einfluss der Schwerkraft nicht fließt.

Des weiteren ist die erfindungsgemäße Süßware geschäumt und zeichnet sich vorzugsweise durch eine Dichte von 0,55 bis 0,75 g/cm³ und eine spezifische Grenzfläche von 1300 bis 2500 cm²/cm³ aus.

Die Milchbestandteile in der erfindungsgemäßen Süßware beinhalten die aus der Milch stammenden Milchproteine, den Milchzucker (Laktose), die Milchsalze und die Vitamine der Milch, und gegebenenfalls auch das Milchfett, wenn bei der Herstellung der Süßware Vollmilch bzw. teilentrahmte Milch und nicht ausschließlich Magermilch verwendet wird.

Die in der erfindungsgemäßen Süßware beinhalteten Speisefette setzen sich aus dem Milchfett und/oder bei der Herstellung zugesetzten pflanzlichen und/oder tierischen Fetten, wie z.B. Palmöl, Butterreinfett, Margarine, zusammen. vorzugsweise liegt der Gesamtspeisefettgehalt in der erfindungsgemäßen Süßware bei 15 bis 50 Gew.%, insbesondere bevorzugt bei 20 bis 45 Gew.%. Hierbei liegt wenigstens ein Teil des Fettes bei Raumtemperatur in kristallisiertem Zustand vor. Vorzugsweise beträgt dabei die Schmelzenthalpie des Fettes mindestens 10 Joule/g in einem Temperaturbereich von 20 bis 50°C.

Der Zucker in der erfindungsgemäßen Süßware beinhaltet die aus der Milch stammende Laktose und bei der Herstellung zugesetzte Zucker, z.B. in Form von Honig, Saccharose, Laktose, Glucose, Fruktose, Maltose und Galaktose. Der Zuckergehalt der erfindungsgemäßen Süßware kann ganz oder teilweise durch Zuckerersatzstoffe, wie z.B. Zuckeraustauschstoffe (z.B. Sorbitol, Maltitol, Isomaltol, Xylitol), Oligosaccharide und Oligofructose, ersetzt werden. Vorzugsweise liegt der Gesamtgehalt an Zucker- und Zuckerersatzstoffen im Bereich von 8 bis 45 Gew.%, insbesondere bevorzugt bei 10 bis 40 Gew.%.

Gemäß einer weiteren bevorzugten Ausführungsform der erfindungsgemäßen Süßware liegt der Wassergehalt bei 13 bis 40 Gew.%, insbesondere bevorzugt bei 20 bis 35 Gew.%.

Die erfindungsgemäße Süßware hat weiterhin vorzugsweise einen pH-Wert, der dem von unfermentierten Milchprodukten entspricht und typischerweise im Bereich von 6,2 bis 7,5 liegt.

Die erfindungsgemäße Süßware kann weiterhin Emulgatoren, vorzugsweise Mono- und/oder Diglyceride, üblicherweise in einer Menge von 0 bis 1 Gew.% enthalten.

Ferner können in der erfindungsgemäßen Süßware weitere Zutaten beinhaltet sein. Hierbei können zur Einstellung der Konsistenz Polysaccharide, wie z.B. Stärke oder Maltodextrin, verwendet werden. Für die Einstellung der Geschmacks- und Farbrichtung können z.B. Kakao, Aromen, Süß- und Farbstoffe beinhaltet sein. Zur Steigerung der physiologischen Wertigkeit der erfindungsgemäßen Süßware können auch beispielsweise Prebiotika und Probiotika beigegeben sein.

Die erfindungsgemäße Süßware zeichnet sich durch eine hohe (fettfreie) Milchtrockenmasse und einen hohen Milcheiweißgehalt aus, wobei gleichzeitig der Denaturierungsgrad der Molkenproteine sehr gering ist.
Mit dem geringen Denaturierungsgrad verbindet sich eine geringe Eiweißschädigung und damit ein hoher Gehalt (Prozentsatz)an nativem Milcheiweiß und somit auch geringe Vitamineinbußen in Bezug auf das bei der Herstellung eingesetzte Milchausgangsprodukt.

Vorzugsweise beträgt die fettfreie Milchtrockenmasse 16 bis 37 Gew.%. Weiterhin liegt der Milcheiweißgehalt bevorzugt bei 6 bis 14 Gew.%. In einer weiteren bevorzugten Ausführungsform ist der Denaturierungsgrad der Molkenproteine ≤ 15%, insbesondere bevorzugt ≤ 10 %.

Der geringe Denaturierungsgrad in der erfindungsgemäßen Süßware hat ein sehr intensives Milcharoma zur Folge. Darüber hinaus ist es möglich, die erfindungsgemäße Süßware ohne Emulgatoren herzustellen.

Ein hoher naturbelassener Milcheiweißgehalt ist ernährungsphysiologisch bedeutend, da native Eiweiße im menschlichen Körper vollständig verwertbar sind.

Die erfindungsgemäße Süßware kann über ein Verfahren hergestellt werden, das die folgenden Schritte umfasst:
a) Vermischen von pasteurisierter frischer Vollmilch und/oder pasteurisierter frischer teilentrahmter Milch und/oder pasteurisierter frischer Magermilch mit Zucker und/oder Zuckerersatzstoffen und gegebenenfalls weiteren Zutaten;
b) Einstellen der im Schritt a) erhaltenen Mischung durch schonendes Eindampfen bei einer Temperatur von ≤ 60°C und bei einem Druck von < 1 bar auf den gewünschten Trockensubstanzgehalt;
c) Einmischen einer Speisefette und gegebenenfalls Emulgatoren umfassenden Fettphase in die im Schritt b) erhaltene, konzentrierte, wässrige Mischung;
d) Pasteurisieren der im Schritt c) erhaltenen Süßware bei Temperaturen von maximal 80°C;
e) Abkühlen der Süßware und Einmischen von Laktosemikrokristallen in die Süßware; und
f) weiteres Abkühlen der Süßware, Aufschäumen der Süßware durch Einblasen von Gas und Auskristallisieren wenigstens eines Teils des Speisefettes der Süßware.

Das erfindungsgemäße Herstellungsverfahren wird im folgenden in Bezug auf einzelne Herstellungsschritte näher beschrieben.

Im Schritt a) wird pasteurisierte frische Vollmilch bzw. pasteurisierte frische teilentrahmte Milch bzw. pasteurisierte frische Magermilch eingesetzt. Diese frische Milch hat gemäß der Milchverordnung (Fassung vom 24.4.1995) eine Kurzzeiterhitzung im kontinuierlichen Durchfluss bei 72 bis 75°C mit einer Heißhaltezeit von 15 bis 30 Sekunden durchlaufen und weist nach der Kurzzeiterhitzung einen negativen Phosphatase- und einen positiven Peroxidasenachweis auf.

Die so pasteurisierte frische Vollmilch bzw. pasteurisierte frische teilentrahmte Milch bzw. pasteurisierte frische Magermilch wird mit Zucker und/oder Zuckerersatzstoffen vermischt. Das Vermischen erfolgt hierbei in der Regel bei einer Temperatur von ≤ 60°C und kann in einer kontinuierlich betriebenen Mischvorrichtung oder in Chargenbehältern erfolgen.

Zur Einstellung der Konsistenz, der Geschmacks- und Farbrichtung und der physiologischen Wertigkeit können in die Milch zusätzlich auch andere Zutaten eingemischt werden, wie z.B. Polysaccharide, Kakao, Aromen, wie z.B. Vanillin, Süß- und Farbstoffe, Probiotika, Prebiotika.

Die Konzentrierung auf den gewünschten Trockensubstanzgehalt gemäß Herstellungsschritt b) erfolgt beispielsweise in einem Eindampfer oder durch Gefriertrocknung bei Temperaturen von ≤ 60°C und bei einem Unterdruck von < 1 bar.

Bei der Herstellung gemäß Schritt c) wird die im Schritt b) erhaltene wässrige Phase (konzentrierte Mischung) vorzugsweise in einer Menge von 50 bis 85 Gew.% vorgelegt und mit der Fettphase vorzugsweise in einer Menge von 15 bis 50 Gew.% vermischt.

Als Fettphase werden üblicherweise pflanzliche und/oder tierische Fette eingesetzt, wie z.B. Palmöl, Butterreinfett, Margarine, die allesamt Speisefette darstellen. Der Einsatz von Emulgatoren, bevorzugt Mono- oder Diglyceride, ist möglich.

Das Mischen im Schritt c) erfolgt üblicherweise bei einer Temperatur von ≤ 60°C, so dass während des Mischvorganges die flüssigen Phasen bestehen bleiben.

Es ist ebenfalls möglich, zu der aus Schritt a) erhaltenen Mischung sofort die Fettphase gemäß Schritt c) zuzugeben, und im Anschluss durch Eindampfen (Schritt b)) den gewünschten Trockensubstanzgehalt einzustellen.

Der nachfolgende Pasteurisationsschritt d) für die Süßware erfolgt bei einer Temperatur von nicht mehr als 80°C. Üblicherweise beträgt die Pasteurisationstemperatur 70 bis 80°C, und der Pasteurisationsvorgang dauert 1 bis 4 Minuten. Um keinen Verlust der Gesamtwassermenge im Endprodukt zu erhalten, muss beim Pasteurisieren darauf geachtet werden, dass kein Wasserverlust durch Verdunsten bzw. Wasserentzug erzielt wird. Deshalb empfiehlt es sich, einen ausreichenden hydrostatischen Druck einzusetzen.

Nach der Pasteurisationsphase wird die Süßware im Schritt e) vorzugsweise auf eine Temperatur von 60 bis 30°C abgekühlt, z.B. unter Verwendung einer an den Ausgang des Pasteurisierapparates angeschlossenen Kühlanlage.

Im Anschluss daran wird die gekühlte Süßware mit einer geringen Menge an kleinen Laktosekeimkristallen geimpft, an denen die gelöste Laktose anschließend kristallisieren kann, ohne eine sensorische Sandigkeit auszubilden. Es ist möglich, eine Suspension aus Keimkristallen und einer Flüssigkeit herzustellen und diese fortlaufend zu der Süßware zuzudosieren.

Anschließend wird die Süßware im Schritt f) weiter abgekühlt, z.B. mittels einer oder mehrerer Kühlanlage(n) auf z.B. 10 bis 20°C. In dieser Phase wird die Süßware aufgeschäumt, indem man üblicherweise mittels eines Injektors einen dosierten Zufluss von Gas, vorzugsweise Inertgas (z.B. Stickstoff), in die Süßware injiziert bzw. einbläst. Weiterhin kommt es zum Auskristallisieren wenigstens eines Teils des Speisefettes.

Die aus dem erfindungsgemäßen Verfahren resultierende, kalte, geschäumte Süßware kann als solche in luftdicht verschließbare Behälter aseptisch abgefüllt und verkauft werden.

Weiterhin bietet es sich an, die erfindungsgemäße Süßware direkt als Bestandteil eines verzehrbaren Produktes, wie z.B. als Füllung bei der Herstellung einer Backware, z.B. einer Milchcreme-Schnitte, zu verwenden, bei der die Süßware auf eine Gebäckschicht oder sandwichartig zwischen zwei oder mehreren Gebäckschichten aufgetragen wird, oder als Füllung in einer gerollten Backware dient.

Die erfindungsgemäße Süßware kann auch zum Auftragen auf oder in eine Konditoreiware verwendet werden. Weiterhin kann die erfindungsgemäße Süßware als Füllung, als Teil einer Füllung oder als Dekor von gefüllten Schokoladenprodukten oder von Zuckerwaren dienen.

Schließlich bietet sich auch die Möglichkeit, die erfindungsgemäße Süßware als Dessert, als Bestandteil von Desserts oder als Brotaufstrich zu verwenden.

Im folgenden wird die Erfindung anhand zweier Beispiele näher erläutert.

### Beispiel 1

Um 100 kg Milchcreme (Süßware) zu erhalten, werden aus einer Mischung aus 190,1 kg pasteurisierter frischer Vollmilch (Wassergehalt 87,5%, Milchtrockenmasse 12,5% und fettfreie Milchtrockenmasse 9% gemäß den Nährwerttabellen für Milch und Milchprodukte gemäß E. Renner, 1992), 18,2 kg Saccharose, 7,5 kg Honig und 0,05 kg Vanillin mittels eines Eindampfers bei 52 bis 58°C insgesamt 142,6 kg Wasser entzogen (Trockensubstanzgehalt der konzentrierten Mischung: 65,74%).

Zu der erhaltenen wässrigen konzentrierten Mischung (73,25 kg) werden 25,93 kg Palmöl bei 55°C gegeben und für 2 Minuten intensiv vermischt.

Im Anschluss daran durchläuft die erhaltene Rohcreme einen Pasteurisierapparat (Schabewärmetauscher) mit einer Temperatur von 70°C während 3,5 Minuten.

Die pasteurisierte Creme gelangt anschließend in eine erste Kühlanlage (Kratzkühler), in der die Creme für 3,5 Minuten bei 44°C verweilt. Darauffolgend wird eine Dispersion aus Laktosemikrokristallen (0,005 kg) und Palmöl (0,8 kg) kontinuierlich mittels einer Dosierpumpe zugegeben.

Die Creme fließt in eine zweite Kühlanlage (Kratzkühler), in der sie für 3,5 Minuten bei 18°C verweilt. Während dieser Verweilzeit wird die Creme mittels eines Injektors mit Stickstoff aufgeschäumt, so dass die Dichte der aufgeschäumten Creme bei dieser Herstellungsstufe im Bereich von 0,5 bis 0,6 g/cm³ liegt. Die Stundenleistung der Anlage beträgt ca. 26 kg Creme. Nach der zweiten Kühlanlage erfolgt die Abfüllung der kalten Creme in ein luftdicht verschließbares Gefäß oder das Plazieren zwischen zwei Gebäckschichten.

Im folgenden ist die analytisch bestimmte Zusammensetzung der oben erhaltenen Creme wiedergegeben:

| | |
|---|---|
| Milcheiweißgehalt | 6,42 Gew.% |
| Zuckergehalt | 32,09 Gew.% |
| Speisefettgehalt | 34,61 Gew.% |
| Mineralsalze | 1,25 Gew.% |
| Milchsalz Calcium | 0,211 Gew.% |
| Wassergehalt | 24,34 Gew.% |
| pH-Wert | 6,55 |
| Gesamtmilchtrockenmasse | 23,97 Gew.% |
| fettfreie Milchtrockenmasse | 17,07 Gew.% |
| Denaturierungsgrad der Molkenproteine | 7 % |
| Vitamin A (mg/100g) | 0,042 |
| Vitamin B₁ (mg/100g) | 0,088 |
| Vitamin B₂ (mg/100g) | 0,45 |
| Vitamin B₆ (mg/100g) | 0,75 |
| Vitamin B₁₂ (µg/100g) | 0,72 |
| Vitamin D₃ (µg/100g) | 5,8 |
| Vitamin E (mg/100g) | 0,61 |
| Vitamin K₁ (µg/100g) | 1,6 |
| Biotin (µg/100g) | 4,12 |
| Folsäure (µg/100g) | < 8 |
| Niacin (mg/100g) | 0,23 |
| Pantothensäure/Vitamin B₃ (mg/100g) | 0,90 |
| α-Lactalbumin (%) | 0,12 |
| β-Lactoglobulin (%) | 0,70 |
| Zuckerkristallgröße (95%) | < 12 µm |
| Dichte | 0,619 g/cm³ |
| Spezifische Grenzfläche | 1533 cm²/cm³ |

Für die Bestimmung der Zusammensetzung der Creme wurden die folgenden analytischen Verfahren verwendet.

| | |
|---|---|
| Trockenmasse/Wasser | IDF 21B: 1987 (Seesand 102°C) |
| Speisefett | IDF 126A: 1988 |
| | (Verfahren nach Weibull) |
| Milchfett | DGF C-V 9a (Bestimmung über Halbmikrobuttersäurezahl) |
| Protein (N x 6,38) | IDF 20B: 1993 (Verfahren nach Kjeldahl) |
| Lactose/Galactose | § 35 LMBG L 01.00-17; enzyma-tisch,Boehringer-Test-Kit |
| Saccharose/Glucose/ Fructose | enzymatisch,Boehringer-Test-Kit |
| Asche | VDLUFA VI C 10.2 (550°C) |
| Calcium | gravimetrisch |
| Denaturierungsgrad | SDS-PAGE-Elektrophorese: Als Maß für die Denaturierung der in der Creme vorliegenden Molkenproteine wurde der Denaturierungsgrad von β-Lactoglobulin elektro-phoretisch bestimmt. Der Denaturierungsgrad, angegeben in %, gibt den Anteil an nativem β-Lactoglobulin zu Gesamt-β-Lactoglobulin (nach Totalreduktion) an und wird aus dem Verhältnis der Peakflächen zueinander berechnet. |
| | Die zu untersuchende Probe wird mit Natriumdodecylsulfat (SDS) vorbehandelt, um die Milchproteine aufzufalten. Mit der anschließenden Total-reduktion der aufgefalteten Proteinmoleküle mittels Di-thiotreitol (DTT) erhält man die monomere, reduzierte Form des gesamten β-Lactoglobulins. In einem Parallelansatz wird die Probe lediglich mit SDS behandelt, um den nativen, nicht reduzierten Anteil des Lactoglobulins bestimmen zu können. Je geringer der native Anteil an β-Lactoglobulin, desto höher der Grad der Denaturierung. |
| | Die Auftrennung der einzelnen |
| | Milchproteine erfolgt mittels Porengradientengelelektro-phorese nach Molekülgröße. Die fixierten und gefärbten Proteine werden nach densi-tometrischer Messung quantitativ ausgewertet. |
| | Der Denaturierungsgrad, bezogen auf β-Lactoglobulin, angegeben in %, wird nach folgender Formel berechnet: |
| | PF_{β-Lactoglobulin nativ} x 100 D = 1-PF_{β-Lactoglobulin reduziert} |
| | D in % |
| | PF Peakfläche β-Lactoglobulin-Bande im nativen bzw. reduzierten Zustand. |
| | |
| Vitamin B₁ | fluorimetisch |
| Vitamin B₂ | HPLC |
| Vitamin B₆ | HPLC |
| Vitamin B₁₂ | turbidimetrisch nach USP XXIII, 1995, M.171 |
| Vitamin K₁ | HPLC |
| Vitamin D₃ | § 35 LMBG L 49.00-1; HPLC |
| Vitamin A | § 35 LMBG L 49.00-3; HPLC |
| Vitamin E | § 35 LMBG L 49.00-3; HPLC |
| Niacin | turbidimetrisch nach USP XXIII, 1995, M.441 |
| Folsäure | mikrobiologisch |
| Pantothensäure/ Vitamin B₃ | turbidimetrisch nach USP XXIII, 1995, M.91 |
| Biotin | turbidimetrisch nach USP XXI, 3.SUPPL. 1986, M.88 |
| α-Lactalbumin | IDF 178:1996 (HPLC) |
| β-Lactoglobulin | IDF 178:1996 (HPLC) |

Die im Beispiel 1 erhaltene Creme wurde weiterhin hinsichtlich ihrer rheologischen Eigenschaften untersucht.

Bei einem Schergefälle von 0,5 s⁻¹ weist die Creme eine effektive Viskosität von 1750 Pas bei 20°C auf, d.h. die Creme ist weich.

Bei einem Schergefälle von 50 s⁻¹ zeigt die Creme bei 20°C eine effektive Viskosität von 6,5 Pas. Die mit steigendem Schergefälle abnehmende effektive Viskosität zeigt den cremigen Charakter.

Die effektiven Viskositäten wurden hierbei mit einem schergeschwindigkeitsgesteuerten Rotationsrheometer als Messgerät bestimmt. Das Meßsystem bestand aus einer Anordnung Platte/Platte (Stahlausführung) mit einem Durchmesser der oberen Platte von 20 mm und einem Plattenspalt von 1 mm. Die Relaxationszeit vor dem Messbeginn betrug 120 Sekunden, und die Messungen wurden doppelt in einem Messbereich von 0,1 bis 100 s⁻¹ in 10 min durchgeführt.

Die Creme fließt nicht unter dem Einfluss der Schwerkraft und ist somit formstabil.

Da 95% der Zuckerkristalle kleiner als 12 um sind, tritt bei der Creme keine sensorisch wahrnehmbare Sandigkeit auf. Die Partikelgrößenverteilung der Zuckerkristalle wurde hierbei unter dem Lichtmikroskop mittels eines Durchlichtverfahrens mit polarisiertem Licht bestimmt.

Die Kristallinität des Fettes wurde mit einem Disc-Gerät in einem Temperaturbereich von 0 bis 60°C und mit einer Heizrate von 2 K/min ermittelt. Hierbei konnten sowohl kristalline als auch flüssige Anteile an Fett festgestellt werden.

Die geschäumte Struktur der Creme wurde mit Hilfe eines Rasterelektronenmikroskops (REM) ermittelt, wobei die untersuchte Probe in unterkühltem flüssigen Stickstoff eingefroren wurde, anschließend gebrochen und mit Gold oder Platin in einer Kryo-Präparationsanlage beschichtet wurde und anschließend in das Elektronenmikroskop eingeschleust wurde. Die elektronenmikroskopischen Aufnahmen zeigen die Feinporigkeit des Schaumes, die durch die spezifische Grenzfläche quantifiziert wird. Mit Hilfe der REM-Bilder wurde durch Bildanalyse/Stereologie die spezifische Grenzfläche bestimmt. REM-Bilder der Schaumstruktur mit einer 350-fachen Vergrößerung dienten hierbei als Bildvorlagen. Die Konturen der Gasblasen wurden markiert (vollständige Erfassung der Blasen pro Bild; mindestens 800 Blasen pro Messung), das Bild wurde gescannt und anschließend ein Binärbild (Blasen und Untergrund) erzeugt. Bei der Bildauswertung wurde die Anzahl der Phasenübergänge zwischen Untergrund und Blasen entlang einer Schar paralleler Linien erfasst. Die spezifische Grenzfläche errechnete sich aus der Anzahl der Phasenübergänge pro Gesamtlinienlänge.

Die lange Haltbarkeit der Creme ergibt sich aus den mikrobiologischen Daten, die nach einer Kühllagerung von 6 Monaten nach der Herstellung ermittelt worden sind. Die über das Plattengussverfahren ermittelten Keimzahlen (§ 35 LMBG L 01.00-5), Hefen (§ 35 LMBG L 01.00-37), Schimmelpilze (§ 35 LMBG L 01.00-37) und Enterobakterien (VDLUFA VI M 7.4.2) waren so gering, dass keine mikrobiologische Beanstandung gegeben ist.

Weiterhin weist die Creme des Beispiels 1 ein geschmacklich ausgeprägtes Milcharoma auf.

### Beispiel 2

Um 100 kg Milchcreme (Süßware) zu erhalten, werden aus einer Mischung aus 397,5 kg pasteurisierter frischer Magermilch (Wassergehalt 90,6%, Gesamttrockenmasse 9,4% und fettfreie Milchtrockenmasse 9,3% gemäß den Nährwerttabellen für Milch und Milchprodukte gemäß E. Renner, 1992) und 9,5 kg Saccharose mittels eines Eindampfers bei 52 bis 58°C insgesamt 327 kg Wasser entzogen (Trockensubstanzgehalt der konzentrierten Mischung 58,58%).

Zu der erhaltenen wässrigen konzentrierten Mischung (80,00 kg) werden 19,2 kg Palmöl bei 55°C gegeben und für 2 Minuten intensiv vermischt.

Im Anschluss daran durchläuft die erhaltene Rohcreme einen Pasteurisierapparat (Schabewärmetauscher) mit einer Temperatur von 70°C während 1,5 Minuten.

Die pasteurisierte Creme gelangt anschließend in eine erste Kühlanlage (Kratzkühler), in der die Creme für 3,5 Minuten bei ca. 44°C verweilt. Darauffolgend wird eine Dispersion aus Laktosemikrokristallen (0,005 kg) und Palmöl (0,8 kg) kontinuierlich mittels einer Dosierpumpe zugegeben.

Die Creme fließt in eine zweite Kühlanlage (Kratzkühler), in der sie für 3,5 Minuten bei 18°C verweilt. Während dieser Verweilzeit wird die Creme mittels eines Injektors mit Stickstoff aufgeschäumt, wobei die Dichte der Creme bei dieser Herstellungsstufe auf 0,5 bis 0,6 g/cm³ eingestellt wird. Die Stundenleistung der Anlage beträgt ca. 26 kg Creme. Nach der zweiten Kühlanlage erfolgt die Abfüllung der kalten Creme in ein luftdicht verschließbares Gefäß oder das Plazieren zwischen zwei Gebäckschichten.

Im folgenden ist die analytisch bestimmte Zusammensetzung der oben erhaltenen Creme wiedergegeben:

| | |
|---|---|
| Milcheiweißgehalt | 13,65 Gew.% |
| Zuckergehalt | 27,71 Gew.% |
| Speisefettgehalt | 21,50 Gew.% |
| Mineralsalze | 3,02 Gew.% |
| Milchsalz Calcium | 0,485 Gew.% |
| Wassergehalt | 32,45 Gew.% |
| pH-Wert | 6,57 |
| Gesamtmilchtrockenmasse | 36,14 Gew.% |
| Fettfreie Milchtrockenmasse | 34,84 Gew.% |
| Denaturierungsgrad der Molkenproteine | 8 % |

| | |
|---|---|
| Vitamin A (mg/100g) | 0,012 |
| Vitamin B₁ (mg/100g) | 0,14 |
| Vitamin B₂ (mg/100g) | 0,84 |
| Vitamin B₆ (mg/100g) | 0,24 |
| Vitamin B₁₂ (µg/100g) | 1,01 |
| Vitamin D₃ (µg/100g) | 4,1 |
| Vitamin E (mg/100g) | 0,68 |
| Vitamin K₁ (µg/100g) | < 1 |
| Biotin (µg/100g) | 7,4 |
| Folsäure (µg/100g) | < 8 |
| Niacin (mg/100g) | 0,39 |
| Pantothensäure/Vitamin B₃(mg/100g) | 1,71 |
| α-Lactalbumin (%) | 0,40 |
| β-Lactoglobulin (%) | 1,69 |
| Zuckerkristallgröße (95%) | < 17 µm |
| Dichte | 0,680 g/cm³ |
| Spezifische Grenzfläche | 1908 cm²/cm³ |

Die Zusammensetzung der obigen Creme und ihre Eigenschaften wurden mit den gleichen analytischen Verfahren wie im Beispiel 1 ermittelt.

Die rheologischen Eigenschaften der erhaltenen Creme des Beispiels 2 ergaben sich wie folgt.

Bei 0,5 s⁻¹ wurde eine effektive Viskosität von 1450 Pas bei 20°C gemessen, d.h. die Creme ist weich.

Die effektive Viskosität der Creme bei 20°C und bei einem Schergefälle von 50 s⁻¹ betrug 2,5 Pas. Da die effektive Viskosität mit zunehmendem Schergefälle abnimmt, liegt eine cremige Konsistenz vor.

Die Patentcreme weist eine Fließgrenze auf, d.h. sie fließt nicht unter dem Einfluss der Schwerkraft, und sie ist somit formstabil.

Die Kristallinität des Fettes wurde mit Hilfe eines DSC-Gerätes ermittelt, wobei sowohl kristalline als auch flüssige Anteile festgestellt wurden.

Da 95% der Zuckerkristalle kleiner als 17 µm sind, tritt keine sensorisch wahrnehmbare Sandigkeit auf.

Die geschäumte Struktur wurde eindeutig mit Hilfe des Raster-Elektronenmikroskops (REM) und dem Kryo-Präparationsverfahren ermittelt. Der Schaum ist feinporig, und die Ermittlung der spezifischen Grenzfläche mittels Bildanalyse/Stereologie ergab eine spezifische Grenzfläche von 1908 cm²/cm³.

Auf der Grundlage der mikrobiologischen Ergebnisse (Keimzahl, Hefen, Schimmelpilze, Enterobakterien) nach einer Kühllagerung von 6 Monaten nach der Herstellung ist keine Beanstandung gegeben, d.h. die Creme ist lange haltbar.

Die erfindungsgemäße Creme des Beispiels 2 weist ein geschmacklich ausgeprägtes Milcharoma auf.

## Patentansprüche

1. Lang haltbare Süßware in Form einer weichen, cremigen, formstabilen und aufgeschäumten Masse, die Milchbestandteile, Speisefette, Zucker und/oder Zuckerersatzstoffe und Wasser umfasst, wobei wenigstens ein Teil des Speisefettes bei Raumtemperatur in kristallisierter Form enthalten ist, und wobei die Süßware keine vom Konsumenten wahrnehmbaren Laktosekristalle enthält,
**gekennzeichnet durch**
einen Milcheiweißgehalt von 6 bis 20 Gew.%,
bezogen auf das Gesamtgewicht der Süßware;
eine fettfreie Milchtrockenmasse von 16 bis 55 Gew.%, bezogen auf das Gesamtgewicht der Süßware; und
einen Denaturierungsgrad der Molkenproteine von ≤ 20%.

2. Süßware nach Anspruch 1, **gekennzeichnet durch** einen Speisefettgehalt von 15 bis 50 Gew.%, bezogen auf das Gesamtgewicht der Süßware.

3. Süßware nach Anspruch 1 oder 2,
**gekennzeichnet durch** einen Gehalt an Zucker und/oder Zuckerersatzstoffen von 8 bis 45 Gew.%, bezogen auf das Gesamtgewicht der Süßware.

4. Süßware nach einem oder mehreren der vorhergehenden Ansprüche, **gekennzeichnet durch** einen Wassergehalt von 13 bis 40 Gew.%, bezogen auf das Gesamtgewicht der Süßware.

5. Süßware nach einem oder mehreren der vorhergehenden Ansprüche, **gekennzeichnet durch** einen pH-Wert von 6,2 bis 7,5.

6. Süßware nach einem oder mehreren der vorhergehenden Ansprüche, **gekennzeichnet durch** einen Milcheiweißgehalt von 6 bis 14 Gew.%, bezogen auf das Gesamtgewicht der Süßware.

7. Süßware nach einem oder mehreren der vorhergehenden Ansprüche, **gekennzeichnet durch** eine fettfreie Milchtrockenmasse von 16 bis 37 Gew.%, bezogen auf das Gesamtgewicht der Süßware.

8. Süßware nach einem oder mehreren der vorhergehenden Ansprüche, **gekennzeichnet durch** einen Denaturierungsgrad von ≤ 15%.

9. Süßware nach Anspruch 8, **gekennzeichnet durch** einen Denaturierungsgrad von ≤ 10 %.

10. Verfahren zur Herstellung einer Süßware gemäß einem der Ansprüche 1 bis 9, **gekennzeichnet durch** die folgenden Herstellungsschritte:
a) Vermischen von pasteurisierter frischer Vollmilch und/oder pasteurisierter frischer teilentrahmter Milch und/oder pasteurisierter frischer Magermilch mit Zucker und/oder Zuckerersatzstoffen und gegebenenfalls weiteren Zutaten;
b) Einstellen der im Schritt a) erhaltenen Mischung **durch** schonendes Eindampfen bei einer Temperatur von < 60°C und bei einem Druck von < 1 bar auf den gewünschten Trockensubstanzgehalt;
c) Einmischen einer Speisefette und gegebenenfalls Emulgatoren umfassenden Fettphase in die im Schritt b) erhaltene, konzentrierte wässrige Mischung;
d) Pasteurisieren der im Schritt c) erhaltenen Süßware bei Temperaturen von maximal 80°C;
e) Abkühlen und Einmischen von Laktosemikrokristallen in die Süßware; und
f) weiteres Abkühlen der Süßware, Aufschäumen der Süßware **durch** Einblasen von Gas und Auskristallisieren wenigstens eines Teils des Speisefettes der Süßware.

11. Verfahren zur Herstellung einer Süßware gemäß einem der Ansprüche 1 bis 9, **gekennzeichnet durch** die folgenden Herstellungsschritte:
a) Vermischen von pasteurisierter frischer Vollmilch und/oder pasteurisierter frischer teilentrahmter Milch und/oder pasteurisierter frischer Magermilch mit Zucker und/oder Zuckerersatzstoffen sowie gegebenenfalls weiteren Zutaten;
b) Einmischen einer Speisefette und gegebenenfalls Emulgatoren umfassenden Fettphase in die im Schritt a) erhaltene wässrige Mischung;
c) Einstellen der im Schritt b) erhaltenen Mischung **durch** schonendes Eindampfen bei einer Temperatur von < 60°C und einem Druck von < 1 bar auf den gewünschten Trockensubstanzgehalt;
d) Pasteurisieren der im Schritt c) erhaltenen Süßware bei Temperaturen von maximal 80°C;
e) Abkühlen und Einmischen von Laktosemikrokristallen in die Süßware; und
f) weiteres Abkühlen der Süßware, Aufschäumen der Süßware **durch** Einblasen von Gas und Auskristallisieren wenigstens eines Teils des Speisefettes der Süßware.

## Claims

1. Long-lasting sweet product in the form of soft, creamy, dimensionally stable and foamed composition, which comprises milk constituents, edible fats, sugar and/or sugar substitutes and water, wherein at least one part of the edible fat is present in crystallised form at room temperature, and wherein the sweet product does not contain lactose crystals which are perceptible by the consumer, **characterised by** a milk protein content of 6 to 20 wt.%, based on the total weight of the sweet product; fat-free milk solids of 16 to 55 wt.%, based on the total weight of the sweet product; and a degree of denaturing of the whey proteins of ≤ 20%.

2. Sweet product according to claim 1, **characterised by** an edible fat content of 15 to 50 wt.%, based on the total weight of the sweet product.

3. Sweet product according to claim 1 or 2, **characterised by** a content of sugar and/or sugar substitutes of 8 to 45 wt.%, based on the total weight of the sweet product.

4. Sweet product according to one or more of the preceding claims, **characterised by** a water content of 13 to 40 wt.%, based on the total weight of the sweet product.

5. Sweet product according to one or more of the preceding claims, **characterised by** a pH value of 6.2 to 7.5.

6. Sweet product according to one or more of the preceding claims, **characterised by** a milk protein content of 6 to 14 wt.%, based on the total weight of the sweet product.

7. Sweet product according to one or more of the preceding claims, **characterised by** fat-free milk solids of 16 to 37 wt.%, based on the total weight of the sweet product.

8. Sweet product according to one or more of the preceding claims, **characterised by** a degree of denaturing of ≤ 15 %.

9. Sweet product according to claim 8, **characterised by** a degree of denaturing of ≤ 10%.

10. Process for producing a sweet product according to one of claims 1 to 9, **characterised by** the following production steps:
a) mixing pasteurised fresh whole milk and/or pasteurised fresh semi-skimmed milk and/or pasteurised fresh low-fat milk with sugar and/or sugar substitutes and optionally further ingredients;
b) adjusting the mixture obtained in step a) to the required solids content by gentle evaporation at a temperature of ≤ 60°C and at a pressure of < 1 bar;
c) mixing a fat phase comprising an edible fat and optionally emulsifiers into the concentrated aqueous mixture obtained in step b);
d) pasteurising the sweet product obtained in step c) at temperatures of 80°C maximum;
e) cooling and mixing lactose micro-crystals into the sweet product; and
f) further cooling the sweet product, foaming the sweet product by injecting gas and crystallising out at least some of the edible fat of the sweet product.

11. Process for producing a sweet product according to one of claims 1 to 9, **characterised by** the following production steps:
a) mixing pasteurised fresh whole milk and/or pasteurised fresh semi-skimmed milk and/or pasteurised fresh low-fat milk with sugar and/or sugar substitutes and optionally further ingredients;
b) mixing a fat phase comprising an edible fat and optionally emulsifiers into the aqueous mixture obtained in step a);
c) adjusting the mixture obtained in step b) to the required solids content by gentle evaporation at a temperature of ≤ 60°C and a pressure of < 1 bar;
d) pasteurising the sweet product obtained in step c) at temperatures of 80°C maximum;
e) cooling and mixing lactose micro-crystals into the sweet product; and
f) further cooling the sweet product, foaming the sweet product by injecting gas and crystallising out at least some of the edible fat of the sweet product.

## Revendications

1. Préparation alimentaire sucrée à longue durée de vie, se présentant sous la forme d'une masse souple, crémeuse, à forme stable et moussée, comprenant des composants lactés, des graisses alimentaires, du sucre et/ou des produits de substitution du sucre et de l'eau, au moins une partie de la graisse alimentaire étant contenue à la température ambiante sous forme cristallisée et la préparation alimentaire sucrée ne contenant aucun cristal de lactose perceptible par le consommateur,
**caractérisé par** une teneur en protéines de lait de 6 à 20 % en poids,
en se référant au poids total de la préparation alimentaire sucrée ;
une masse sèche de lait exempte de graisses, de 16 à 55 % en poids, en se référant au poids global de la préparation alimentaire sucrée ; et
un degré de dénaturation des protéines sériques ≤ 20 %.

2. Préparation alimentaire sucrée selon la revendication 1, **caractérisé par** une teneur en graisses alimentaire de 15 à 50 % en poids, en se référant au poids global de la préparation alimentaire sucrée.

3. Préparation alimentaire sucrée selon la revendication 1 ou 2, **caractérisé par** une teneur en sucre et/ou en substitut du sucre de 8 à 45 % en poids, en se référant au poids global de la préparation alimentaire sucrée.

4. Préparation alimentaire sucrée selon une ou plusieurs des revendications précédentes, **caractérisé par** une teneur en eau de 13 à 40 % en poids, en se référant au poids global de la préparation alimentaire sucrée.

5. Préparation alimentaire sucrée selon une ou plusieurs des revendications précédentes, **caractérisé par** une valeur de pH de 6,2 à 7,5.

6. Préparation alimentaire sucrée selon une ou plusieurs des revendications précédentes, **caractérisé par** une teneur en protéines de lait de 6 à 14 % en poids en se référant au poids global de la préparation alimentaire sucrée.

7. Préparation alimentaire sucrée selon une ou plusieurs des revendications précédentes, **caractérisé par** une masse de matière sèche de lait, exempte de graisse, de 16 à 37 % en poids en se référant au poids global de la préparation alimentaire sucrée.

8. Préparation alimentaire sucrée selon une ou plusieurs des revendications précédentes, **caractérisé par** un degré de dénaturation ≤ 15 %.

9. Préparation alimentaire sucrée selon la revendication 8, **caractérisé par** un degré de dénaturation ≤ 10 %.

10. Procédé de fabrication d'une préparation alimentaire sucrée selon l'une des revendications 1 à 9, **caractérisé par** les étapes de fabrication suivantes :
a) mélange de lait entier frais pasteurisé et/ou de lait partiellement écrémé frais pasteurisé et/ou de lait maigre frais pasteurisé avec du sucre et/ou des substituts du sucre et, le cas échéant, d'autres additifs ;
b) réglage du mélange obtenu à l'étape a) par concentration effectuée avec ménagement, à une température ≤ 60°C et à une pression < 1 bar, pour obtenir la teneur souhaitée en substance sèche ;
c) mélange d'une phase graisseuse comprenant une graisse alimentaire et, le cas échéant, des émulsifiants dans le mélange aqueux concentré obtenu à l'étape b) ;
d) pasteurisation de la préparation alimentaire sucrée obtenue à l'étape c), à des températures maximales de 80°C ;
e) refroidissement et mélange de micro-cristaux de lactose dans la préparation alimentaire sucrée ; et
f) refroidissement supplémentaire de la préparation alimentaire sucrée, moussage de la préparation alimentaire sucrée par insufflation de gaz, et cristallisation d'au moins une partie de la graisse alimentaire de la préparation alimentaire sucrée.

11. Procédé de fabrication d'une préparation alimentaire sucrée selon l'une des revendications 1 à 9, **caractérisé par** les étapes de fabrication suivantes :
a) mélange de lait entier frais pasteurisé et/ou de lait partiellement écrémé frais pasteurisé et/ou de lait maigre frais pasteurisé avec du sucre et/ou des substituts du sucre et, le cas échéant, d'autres additifs ;
b) mélange d'une phase graisseuse comprenant une graisse alimentaire et, le cas échéant, des émulsifiants dans le mélange aqueux obtenu à l'étape a) ;
c) réglage du mélange obtenu à l'étape b) par concentration effectuée avec ménagement à une température ≤ 60°C et à une pression < 1 bar pour obtenir la teneur souhaitée en substance sèche ;
d) pasteurisation de la préparation alimentaire sucrée obtenue à l'étape c), à des températures maximales de 80°C ;
e) refroidissement et mélange de micro-cristaux de lactose dans la préparation alimentaire sucrée ; et
f) refroidissement supplémentaire de la préparation alimentaire sucrée, moussage de la préparation alimentaire sucrée par insufflation de gaz, et cristallisation d'au moins une partie de la graisse alimentaire de la préparation alimentaire sucrée.
